# EUROPEAN PATENT APPLICATION

(11) **EP 4 696 455 A1**
(43) Date of publication of application: **18.02.2026**
(21) Application number: 24807378.5
(22) Date of filing: 17.04.2024
(51) Int. Cl.: B23Q 11/00, B23Q 17/09, B23Q 17/12, B23Q 5/04

(54) **ACTIVE VIBRATION REDUCTION DEVICE OF MACHINE TOOL AND METHOD THEREOF**

(30) Priority: 16.05.2023 KR 20230062956
(71) Applicant: DN Solutions Co., Ltd., Changwon-si, Gyeongsangnam-do 51537 (KR)
(72) Inventor: LEE, Changho, Gimhae-si, Gyeongsangnam-do 50976 (KR)
(74) Representative: BCKIP Part mbB
(86) International application number: PCT/KR2024/005168
(87) International publication number: WO 2024/237499

(57) **Abstract**

The present disclosure relates to an active vibration reduction device and method for a machine tool, which actively reduces vibration of an individual unit according to a workpiece machining condition by causing an excitation unit to change and generate excitation opposite to vibration generated in the individual unit in any one of a weak-structure mode or a normal-machining mode depending on a type of vibration occurring in real time during driving of the individual unit for workpiece machining.

## Description

### [FIELD OF THE DISCLOSURE]

The present disclosure relates to an active vibration reduction device and method for a machine tool, and more particularly, to an active vibration reduction device and method for a machine tool, which actively reduces vibration of an individual unit according to a workpiece machining condition by causing an excitation unit to change and generate excitation opposite to vibration generated in the individual unit in any one of a weak-structure mode or a normal-machining mode depending on a type of vibration occurring in real time during driving of the individual unit for workpiece machining.

### [BACKGROUND OF THE DISCLOSURE]

In general, a machine tool refers to a machine used to process metal/non-metal workpieces in a desired shape and dimension using a suitable tool by using various types of cutting or non-cutting methods.

Various types of machine tools including a turning center, a vertical/horizontal machining center, a door-type machining center, a Swiss turning machine, an electric discharge machine, a horizontal NC boring machine, and a CNC lathe are being widely used in various industrial sites for the purpose of the corresponding work.

In general, various types of currently used machine tools each have a control panel to which a numerical control (NC) technology or a computerized numerical control (CNC) technology is applied. The control panel is provided with a multifunctional switch or button, and a monitor.

In addition, the machine tool includes a table on which a material, i.e., a workpiece is seated and which is transferred to machine the workpiece, a palette used to prepare the workpiece to be machined, a main shaft coupled to a tool or the workpiece and configured to be rotated, and a tailstock and a steady rest configured to support the workpiece during machining.

In general, the machine tool is provided with a transfer unit configured to transfer the table, a tool post, the main shaft, the tailstock, and the steady rest along a transfer shaft in order to perform various types of machining.

In addition, in general, the machine tool uses a plurality of tools in order to perform various types of machining, and a tool magazine or a turret is used in the form of a tool storage place for receiving and storing the plurality of tools.

In addition, in general, the machine tool is equipped with an automatic tool changer (ATC) configured to withdraw a specific tool from the tool magazine or remount the tool on the tool magazine based on an instruction of a numerical control unit in order to improve productivity of the machine tool.

In addition, in general, the machine tool is equipped with an automatic palette changer (APC) in order to minimize the non-processing time. The automatic palette changer (APC) automatically changes the palettes between a workpiece machining region and a workpiece loading region. The workpiece may be mounted on the palette.

In general, a servo motor is used in order to drive the automatic tool changer (ATC), the automatic pallet changer (APC), the tailstock, the steady rest, or the like in a machine tool.

In general, machine tools may be divided into a turning center and a machining center. The machining center can machine a workpiece using a rotating tool. On the other hand, the turning center can machine a rotating workpiece using a tool.

In general, a machine tool such as a machining center includes various individual devices that are fixed or movable relative to other fixed or moving devices in order to machine a workpiece. That is, a bed may be fixedly installed on the ground or a base, and a saddle may be installed to be movable in a horizontal, vertical, or height direction with respect to the bed. In addition, a column may be installed to be movable in a horizontal or vertical direction with respect to the saddle, a spindle may be installed to be movable in a horizontal, vertical, or height direction with respect to the column, and a tool may be mounted on a tip of the spindle.

When operating the machine tool, such as a spindle, a column, or a saddle, dynamic characteristics of each individual device from which vibration is generated change as the transfer shaft changes a position. That is, a frequency (Hz), i.e., the natural frequency or a compliance (µm/N) changes. The compliance may be interpreted as an amount of deformation that occurs when a unit force is applied. Accordingly, vibration increases in a weak vibration mode, which reduces processing accuracy and increases an occurrence rate of defective products, resulting in waste of resources, increased machining costs, and a decrease in productivity due to a decrease in cutting performance.

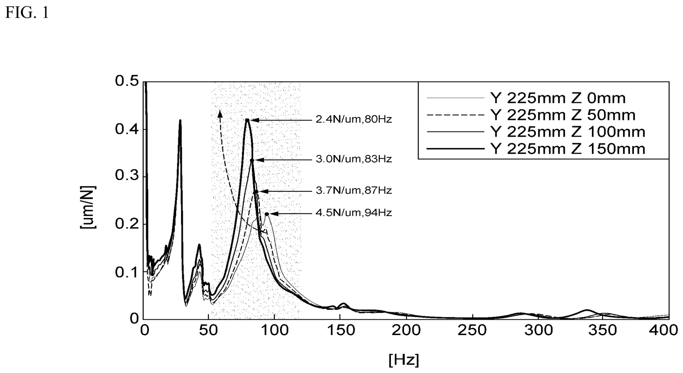

That is, for example, as illustrated in FIG. 1, in a vertical machining center, if the transfer shaft on the Z-axis changes in a situation where the Y-axis is at the same position, such as a case where the Z-axis is 0 mm when the Y-axis of the spindle is 255 mm (green solid line), the Z-axis is 50 mm when the Y-axis is 255 mm (blue solid line), the Z-axis is 100 mm when the Y-axis is 255 mm (red solid line), and the Z-axis is 150 mm when the Y-axis is 255 mm (black solid line), the frequency (Hz) on the horizontal axis or the compliance on the vertical axis changes, thereby changing the dynamic characteristics of the machine tool or individual device.

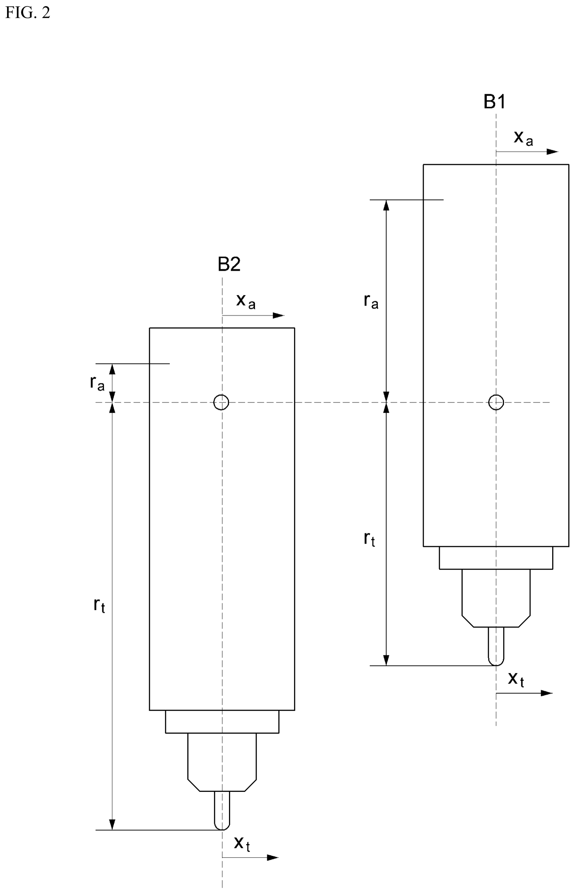

In addition, as illustrated in FIG. 2, when the Z-axis is lowered by 200 mm as in B2 from a state in which the Z-axis is at the initial position as in a B1 state, the rt value increases with respect to the central axis, and accordingly the vibration increases at the tip of the individual device such as the spindle, resulting in a change in dynamic characteristics. Accordingly, it becomes necessary to change the dynamic stiffness.

In this way, vibration inevitably occurs in a rotating machine tool due to the mass member, the rotation speed, and the like of the rotating body. In general, a system in which vibration is attenuated by attaching an additional mass member to equipment where vibration is generated is suggested.

As is known, this is a theory that cancels vibration by applying an equal force in an opposite direction to a magnitude of a force through which the vibration is transmitted. Such a tuned mass damper design theory was defined as an equation of motion by Den Hartog in 1934. According to this theory, vibration of equipment where the vibration is generated can be reduced by installing a tuned mass damper with the same frequency characteristics as the resonance frequency of the equipment in an opposite direction to an excitation direction.

However, the vibration reduction device and method of the machine tool of the related art is configured in a form of vibrating only with a fixed mass and frequency for the individual device of the machine tool and therefore cannot actively deal with a real-time change in dynamic characteristics of the individual device that vibration intensity and vibration direction are changed in real time, resulting in increased cost and time to reduce the vibration of the machine tool, and reducing stability and reliability of the machine tool.

To solve these problems, vibration reduction was attempted by performing real-time excitation using an electromagnetic actuator.

Vibrations generated during material machining are classified into forced vibration, which is caused by variations in cutting force generated as a tool blade removes the material, and self-excited vibration, which is caused by a structurally weak vibration mode of the machine tool.

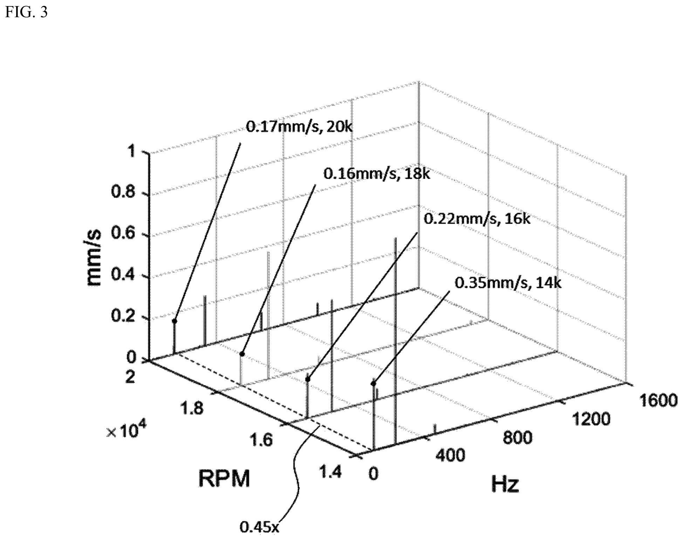

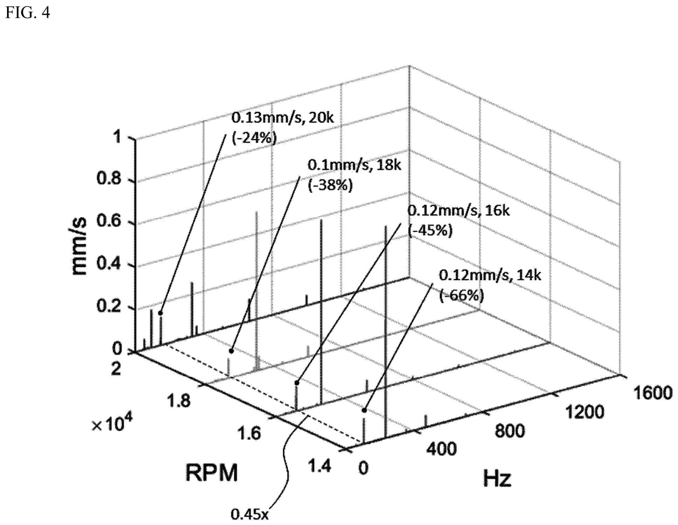

That is, as illustrated in FIGS. 3 and 4, it can be confirmed that, when the vibration reduction device and method for a machine tool of the related art are applied, the values caused by self-excited vibration in the initial section of the graph are reduced.

However, as illustrated in FIGS. 3 and 4, even when the vibration reduction device and method for a machine tool of the related art are applied, the vibrations associated with normal machining that appear in the latter section of the graph still remain.

However, the vibration reduction device and method for a machine tool of the related art, which are designed to improve changes in dynamic characteristics, have a problem in that they actively reduce only vibrations caused by changes in dynamic characteristics due to weak-structure vibration induced by self-excited vibration, and cannot improve machining quality through effective vibration reduction under normal finishing machining conditions.

In addition, there is a problem in that, during milling machining, precise machining and surface quality cannot be achieved, which lowers the reliability and safety of the machine tool and increases the occurrence of defective products due to deterioration in machining quality, thereby resulting in waste of resources.

Further, although it is not problematic for general workpieces that permit large machining errors, there is a problem in that surface roughness cannot be ensured in accordance with current machining trends requiring precision machining, small tolerances, and excellent surface roughness.

Accordingly, there is an urgent need to develop a technology capable of reducing vibration in real time not only under changes in dynamic stiffness characteristics caused by self-excited vibration but also under normal finishing machining conditions.

### [Disclosure]

### [SUMMARY]

The present disclosure has been made in an effort to solve the above problems, and an object of the present disclosure is to provide an active vibration reduction device and method for a machine tool, which actively reduces vibration of an individual unit according to a workpiece machining condition by causing an excitation unit to change and generate excitation opposite to vibration generated in the individual unit in any one of a weak-structure mode or a normal-machining mode depending on a type of vibration occurring in real time during driving of the individual unit for workpiece machining, thereby improving dynamic stiffness through vibration reduction in the weak-structure mode, improving material removal rate during milling machining in the normal-machining mode, improving machined surface quality during semi-finishing or finishing machining to maximize machining accuracy of the machine tool, enhancing safety and reliability of the machine tool, reducing production and maintenance costs, maximizing space utilization, and improving operator convenience through downsizing of the excitation unit, reducing manufacturing, installation, and maintenance costs through modularization and compactness of the excitation unit, and improving machining productivity by minimizing non-machining time such as analysis for real-time active vibration reduction.

In order to achieve the object of the present disclosure, an active vibration reduction device for a machine tool according to the present disclosure includes: an individual unit configured to be driven for workpiece machining; an excitation unit arranged on the individual unit and configured to generate excitation during driving of the individual unit; and a control module configured to control an operation of the excitation unit, wherein the control module causes the excitation unit to change and generate excitation opposite to vibration generated in the individual unit in any one of a weak-structure mode or a normal-machining mode depending on a type of vibration occurring in real time during driving of the individual unit for workpiece machining, thereby actively reducing vibration of the individual unit according to a workpiece machining condition.

In addition, in another preferred exemplary embodiment of the active vibration reduction device for a machine tool according to the present disclosure, the active vibration reduction device for a machine tool may further include a sensing unit configured to sense vibration of the individual unit during driving of the individual unit; and a detection unit configured to detect a drive amount of the individual unit during driving of the individual unit.

In addition, in another preferred exemplary embodiment of the active vibration reduction device for a machine tool according to the present disclosure, the control module of the active vibration reduction device for a machine tool includes: a memory unit configured to store data for actively reducing vibration of the individual unit; a selection unit configured to compare and analyze a sensing value sensed by the sensing unit and a drive amount detected by the detection unit with computed values computed based on the data stored in the memory unit, to determine whether vibration occurring in real time during driving of the individual unit is weak-structure vibration or normal-machining vibration, and to select either a weak-structure mode or a normal-machining mode; a weak-structure excitation calculation unit configured to, when the selection unit selects the weak-structure mode, calculate, using the data stored in the memory unit, an intensity of weak-structure excitation to be generated by the excitation unit; a normal-machining excitation calculation unit configured to, when the selection unit selects the normal-machining mode, calculate, using the data stored in the memory unit and data from the selection unit, an intensity of normal-machining excitation to be generated by the excitation unit; and a processing unit configured to, based on the data stored in the memory unit and on the weak-structure excitation value calculated by the weak-structure excitation calculation unit or on the normal-machining excitation value, determine a direction of weak-structure excitation or normal-machining excitation to be generated by the excitation unit, and to generate, according to the determination result, weak-structure excitation or normal-machining excitation opposite to that of the individual unit, thereby actively reducing weak-structure vibration or normal-machining vibration of the individual unit.

In addition, in another preferred exemplary embodiment of the active vibration reduction device for a machine tool according to the present disclosure, the memory unit of the active vibration reduction device for a machine tool may include a basic data storage unit configured to store data on workpiece information, individual unit information, a machining program, and a drive program; a reference data storage unit configured to store data on a reference value and a gain value for each individual unit; a real-time data storage unit configured to store a sensing value sensed by the sensing unit and a drive amount detected by the detection unit during driving of the individual unit for workpiece machining; and a standard data storage unit configured to store standard machining vibration data during normal-machining vibration according to a drive amount for each individual unit.

In addition, in another preferred exemplary embodiment of the active vibration reduction device for a machine tool according to the present disclosure, the selection unit of the active vibration reduction device for a machine tool may include: a confirmation unit configured to confirm whether the individual unit is driven during workpiece machining; a vibration detection unit configured to detect whether vibration of the individual unit occurs, based on the data stored in the real-time data storage unit, when a confirmation result of the confirmation unit indicates that the individual unit is driven; a computation unit configured to compute a computed value for vibration depending on a drive amount of the individual unit, based on the data stored in the real-time data storage unit and the data stored in the standard data storage unit, when a detection result of the vibration detection unit indicates that the individual unit is operated and vibration is detected; a comparison unit configured to compare a reference value stored in the data stored in the reference data storage unit with the sensing value of the sensing unit and the computed value of the computation unit; and a decision unit configured to select the normal-machining mode when a comparison result of the comparation unit indicates that the sensing value and the computed value are the same, or the sensing value is smaller than the computed value, or the sensing value is smaller than the reference value, and to select the weak-structure mode when a comparison result of the comparation unit indicates that the sensing value is greater than the computed value and exceeds the reference value.

In addition, in another preferred exemplary embodiment of the active vibration reduction device for a machine tool according to the present disclosure, the weak-structure excitation calculation unit of the active vibration reduction device for a machine tool may include a speed calculation unit configured to calculate a speed of the individual unit, based on the data stored in the basic data storage unit and the reference data storage unit, when the weak-structure mode is selected by the decision unit; a weak-structure excitation value calculation unit configured to calculate a weak-structure excitation value to be generated by the excitation unit, based on a calculation result of the speed calculation unit and the data stored in the basic data storage unit and the reference data storage unit; and a weak-structure excitation current value calculation unit configured to calculate a weak-structure excitation current value to be transmitted to the excitation unit, based on a calculation result of the weak-structure excitation value calculation unit and the data stored in the basic data storage unit and the reference data storage unit.

In addition, in another preferred exemplary embodiment of the active vibration reduction device for a machine tool according to the present disclosure, the normal-machining excitation calculation unit of the active vibration reduction device for a machine tool may include a normal-machining excitation value calculation unit configured to calculate a normal-machining excitation value to be generated by the excitation unit, based on the computed value of the computation unit and the data stored in the standard data storage unit, when the normal-machining mode is selected by the decision unit; and a normal-machining excitation current value calculation unit configured to calculate a normal-machining excitation current value to be transmitted to the excitation unit, based on a calculation result of the normal-machining excitation value calculation unit and the data stored in the standard data storage unit.

In addition, in another preferred exemplary embodiment of the active vibration reduction device for a machine tool according to the present disclosure, the processing unit of the active vibration reduction device for a machine tool may include a determination unit configured to determine a direction of excitation to be generated by the excitation unit, based on a sensing result of the sensing unit, a detection result of the detection unit, a selection result of the selection unit, the data stored in the memory unit, and a calculation result of the weak-structure excitation current value calculation unit or a calculation result of the normal-machining excitation current value calculation unit; and a reduction unit configured to cause the excitation unit to generate excitation having a vibration intensity and a vibration direction opposite to those of the weak-structure vibration or the normal-machining vibration of the individual unit, thereby actively reducing the weak-structure vibration or the normal-machining vibration of the individual unit in real time, based on a sensing result of the sensing unit, a detection result of the detection unit, a selection result of the selection unit, a determination result of the determination unit, and the data stored in the memory unit.

In addition, in another preferred exemplary embodiment of the active vibration reduction device for a machine tool according to the present disclosure, the computation unit and the normal-machining excitation value calculation unit of the active vibration reduction device for a machine tool may calculate the computed value and the normal-machining excitation value through linear interpolation using the standard machining vibration data during normal-machining vibration stored in the standard data storage unit, according to the drive amount detected by the detection unit.

In addition, in another preferred exemplary embodiment of the active vibration reduction device for a machine tool according to the present disclosure, the individual unit of the active vibration reduction device for a machine tool may be a spindle configured to rotate during workpiece machining, and the drive amount detected by the detection unit may be a rotational speed of the spindle.

In addition, in another preferred exemplary embodiment of the active vibration reduction device for a machine tool according to the present disclosure, the excitation unit of the active vibration reduction device for a machine tool may include a housing unit; a fixed unit fixedly installed on the housing unit and configured to selectively form an electromagnetic field; an actuator unit configured to transmit a current applied to the fixed unit under control of the control module; a guide unit installed on a portion of the housing unit; and a vibration unit slidably coupled to the guide unit in order to generate excitation when a specific electromagnetic field is formed by a current value applied through the actuator unit.

In addition, in another preferred exemplary embodiment of the active vibration reduction device for a machine tool according to the present disclosure, the excitation unit of the active vibration reduction device for a machine tool may further include a damper unit arranged between the housing unit and the vibration unit.

In addition, in another preferred exemplary embodiment of the active vibration reduction device for a machine tool according to the present disclosure, the excitation unit of the active vibration reduction device for a machine tool may be arranged in plurality on one individual unit and may generate multi-degree-of-freedom excitation under control of the control module.

In order to achieve another object of the present disclosure, an active vibration reduction method for a machine tool according to the present disclosure includes: storing data for causing an excitation unit to change and generate excitation opposite to vibration generated in an individual unit in any one of a weak-structure mode or a normal-machining mode depending on a type of vibration occurring in real time during driving of the individual unit for workpiece machining, thereby actively reducing vibration of the individual unit; confirming whether the individual unit is driven during workpiece machining; sensing vibration of the individual unit when a confirmation result indicates that the individual unit is driven; detecting a drive amount of the individual unit when a confirmation result indicates that the individual unit is driven; detecting whether vibration of the individual unit occurs during driving of the individual unit, based on a confirmation result, a sensing result, and a detection result; computing a computed value for vibration according to a drive amount of the individual unit, based on the drive amount of the individual unit and pre-stored data, when a vibration detection result indicates that vibration of the individual unit is detected; comparing a reference value stored in the pre-stored data, a sensing value obtained from a sensing result, and a computed value obtained from a computation result; selecting the normal-machining mode when a comparison result indicates that the sensing value and the computed value are the same, or the sensing value is smaller than the computed value, or the sensing value is smaller than the reference value, and selecting the weak-structure mode when a comparison result indicates that the sensing value is larger than the computed value and exceeds the reference value; calculating an intensity of weak-structure excitation to be generated by the excitation unit, based on the pre-stored data and a selection result, when the selection result indicates that the weak-structure mode is selected, and calculating an intensity of normal-machining excitation to be generated by the excitation unit, based on the pre-stored data and a selection result, when the selection result indicates that the normal-machining mode is selected; determining a direction of the weak-structure excitation or normal-machining excitation to be generated by the excitation unit, based on a sensing result, a detection result, a confirmation result, a selection result, a calculation result, and the pre-stored data; and causing the excitation unit to generate excitation having a vibration intensity and a vibration direction opposite to those of weak-structure vibration or normal-machining vibration of the individual unit, thereby actively reducing the weak-structure vibration or normal-machining vibration of the individual unit in real time, based on a sensing result, a detection result, a confirmation result, a selection result, a calculation result, a determination result, and the pre-stored data.

In the active vibration reduction device and method for a machine tool according to the present disclosure, vibration of the individual unit is actively reduced according to a workpiece machining condition by causing the excitation unit to change and generate excitation opposite to vibration generated in the individual unit in any one of the weak-structure mode or the normal-machining mode depending on a type of vibration occurring in real time during driving of the individual unit for workpiece machining, and accordingly, dynamic stiffness can be improved through vibration reduction in the weak-structure mode, a material removal rate can be improved during milling machining in the normal-machining mode, and machined surface quality can be improved during semi-finishing or finishing machining, thereby maximizing machining accuracy of the machine tool, and enhancing safety and reliability of the machine tool.

In addition, in the active vibration reduction device and method for a machine tool according to the present disclosure, a direction of the weak-structure excitation or normal-machining excitation to be generated by the excitation unit is determined based on the data stored in the memory unit and the weak-structure excitation value calculated by the weak-structure excitation calculation unit or the normal-machining excitation value, and the fixed unit and the vibration unit of the excitation unit are implemented in a sliding manner via an electromagnet such that, according to a determination result, the weak-structure excitation or normal-machining excitation opposite to that of the individual unit is generated to actively reduce the weak-structure vibration or normal-machining vibration of the individual unit, and accordingly, through downsizing of the excitation unit, production and maintenance costs can be reduced, space utilization can be maximized, and compactness of the machine tool can be achieved.

Moreover, in the active vibration reduction device and method for a machine tool according to the present disclosure, the current and direction transmitted to the excitation unit are conveniently and promptly adjusted by the control unit to automatically control promptly and accurately the vibration intensity and vibration direction of excitation generated by the excitation unit. Accordingly, machining productivity can be improved by minimizing non-machining time due to analysis, maintenance, and the like for vibration reduction according to a dynamic characteristic state that changes in real time in the individual unit.

Furthermore, in the active vibration reduction device and method for a machine tool according to the present disclosure, the vibration occurring in the individual unit is automatically and actively reduced by the control unit and the excitation unit according to changes in magnitude and intensity of the vibration, and accordingly, operator convenience can be promoted, production and maintenance costs and time can be reduced, and export growth can be promoted.

### [Description of the Drawings]

FIG. 1 illustrates a graph of vibration generation due to movement in Y-axis and Z-axis directions of a machine tool of the related art.
FIG. 2 illustrates a conceptual diagram of an increase in vibration generation due to a change in the Z-axis position of a spindle of the machine tool.
FIG. 3 illustrates a vibration-related graph in a state in which an active vibration reduction device and method for a machine tool according to the related art is not applied.
FIG. 4 illustrates a graph illustrating vibration reduction in a state in which an active vibration reduction device and method for a machine tool according to the related art is applied.
FIG. 5 illustrates a conceptual diagram for a machine tool in a state in which an active vibration reduction device for a machine tool according to an exemplary embodiment of the present disclosure is installed.
FIG. 6 illustrates a rear perspective view of the active vibration reduction device for a machine tool according to an exemplary embodiment of the present disclosure, with a base portion removed from an excitation unit.
FIG. 7 is a conceptual diagram illustrating that vibration can be reduced with two degrees of freedom in the active vibration reduction device for a machine tool according to an exemplary embodiment of the present disclosure.
FIG. 8 illustrates a configuration diagram of a control module of the active vibration reduction device for a machine tool according to an exemplary embodiment of the present disclosure.
FIG. 9 shows a flowchart of an active vibration reduction method for a machine tool according to an exemplary embodiment of the present disclosure.
FIG. 10 illustrates a graph illustrating a reduced state of normal-machining vibration when the active vibration reduction device and method for a machine tool according to an exemplary embodiment of the present disclosure is applied.
FIG. 11 illustrates a graph illustrating a reduced state of normal-machining vibration during X-axis cutting in a normal-machining vibration mode when the active vibration reduction device and method for a machine tool according to the present disclosure is applied.
FIG. 12 illustrates a graph illustrating a reduced state of normal-machining vibration during Y-axis cutting in the normal-machining vibration mode when the active vibration reduction device and method for a machine tool according to the present disclosure is applied.

### [Detailed Description of Certain Inventive Embodiment]

Hereinafter, an active vibration reduction device and method for a machine tool according to an exemplary embodiment of the present disclosure will be described in detail with respect to the drawings. The following exemplary embodiments are provided as examples for fully transferring the spirit of the present disclosure to those skilled in the art. Therefore, the present disclosure is not limited to the exemplary embodiments described below and may be specified as other aspects. Further, in the drawings, a size and a thickness of the apparatus may be exaggerated for convenience. Like reference numerals indicate like constituent elements throughout the specification.

Advantages and features of the present disclosure and methods of achieving the advantages and features will be clear with reference to exemplary embodiments described in detail below together with the accompanying drawings. However, the present disclosure is not limited to the exemplary embodiments disclosed herein but will be implemented in various forms. The exemplary embodiments of the present disclosure are provided so that the present disclosure is completely disclosed, and a person with ordinary skill in the art can fully understand the scope of the present disclosure. The present disclosure will be defined only by the scope of the appended claims. Like reference numerals refer to like constituent elements throughout the specification. In the drawings, sizes and relative sizes of layers and regions may be exaggerated for clarity of description.

The terms used in the present specification are for explaining the exemplary embodiments, not for limiting the present disclosure. Unless particularly stated otherwise in the present specification, a singular form also includes a plural form. The terms such as "comprise (include)" and/or "comprising (including)" used in the specification do not exclude presence or addition of one or more other constituent elements, steps, operations, and/or elements, in addition to the mentioned constituent elements, steps, operations, and/or elements.

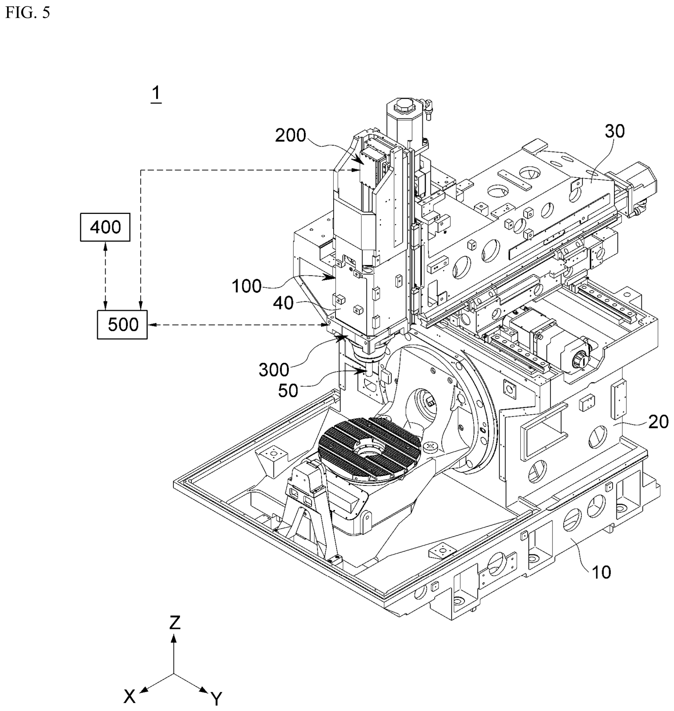

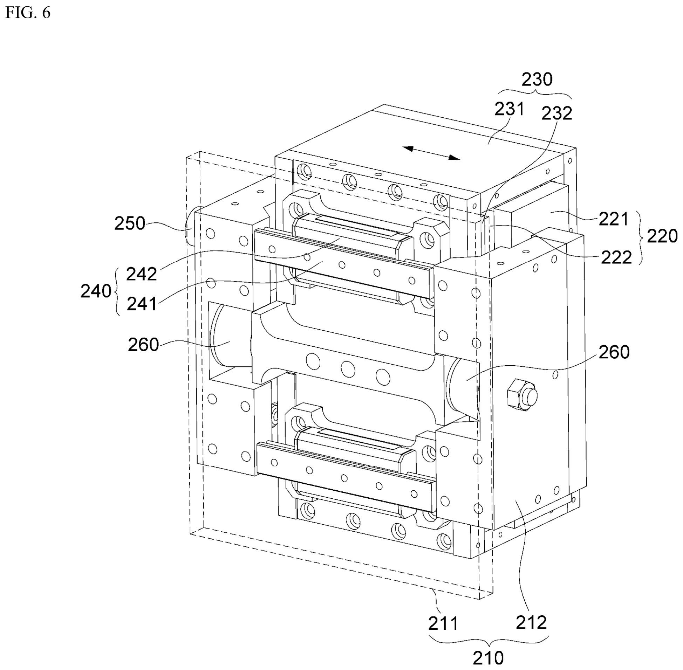

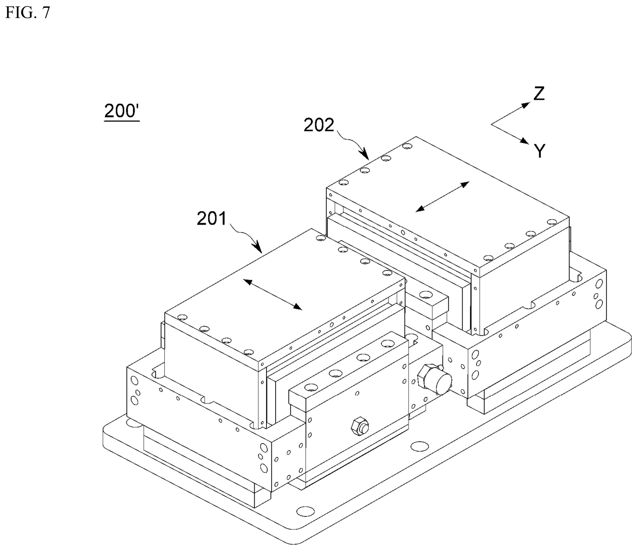

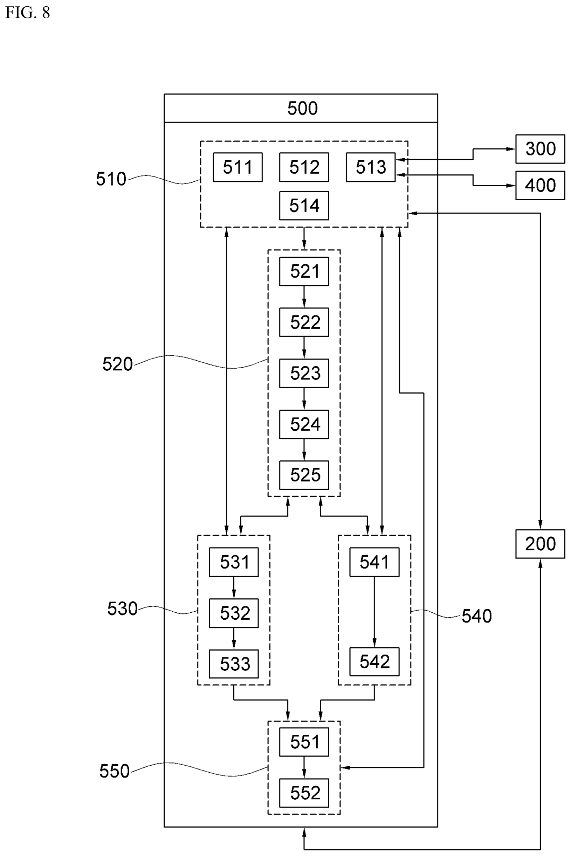

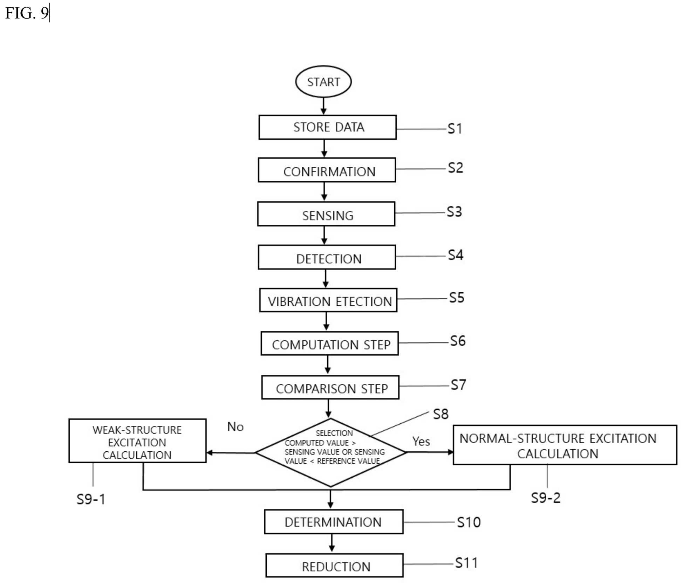

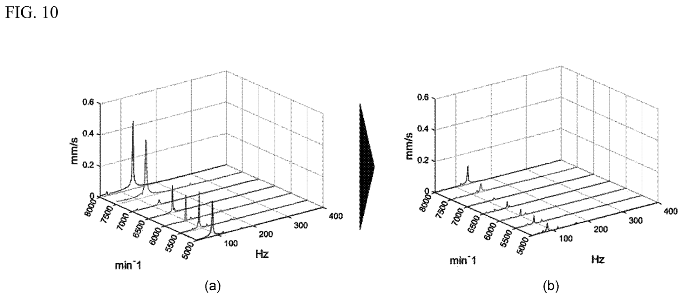

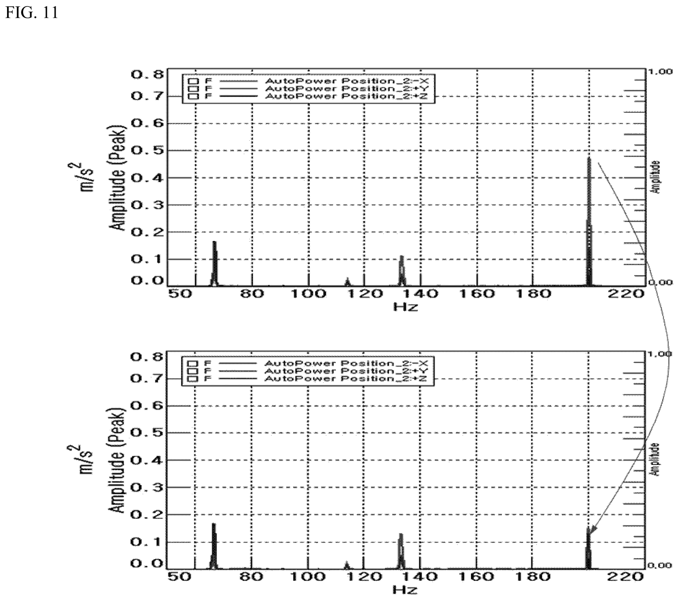

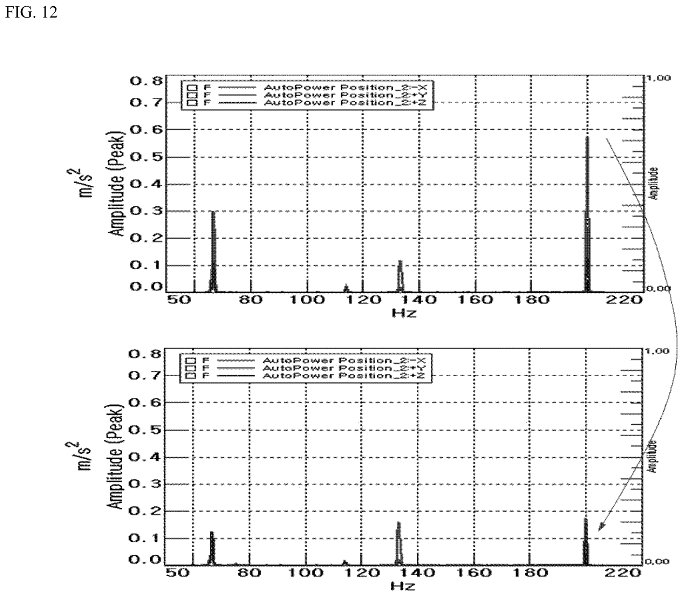

FIG. 5 illustrates a conceptual diagram for a machine tool in a state in which an active vibration reduction device for a machine tool according to an exemplary embodiment of the present disclosure is installed. FIG. 6 illustrates a rear perspective view of the active vibration reduction device for a machine tool according to an exemplary embodiment of the present disclosure, with a base portion removed from an excitation unit. FIG. 7 is a conceptual diagram illustrating that vibration can be reduced with two degrees of freedom in the active vibration reduction device for a machine tool according to an exemplary embodiment of the present disclosure. FIG. 8 illustrates a configuration diagram of a control module of the active vibration reduction device for a machine tool according to an exemplary embodiment of the present disclosure. FIG. 9 shows a flowchart of an active vibration reduction method for a machine tool according to an exemplary embodiment of the present disclosure. FIG. 10 illustrates a graph illustrating a reduced state of normal-machining vibration when the active vibration reduction device and method for a machine tool according to an exemplary embodiment of the present disclosure is applied. FIG. 11 illustrates a graph illustrating a reduced state of normal-machining vibration during X-axis cutting in a normal-machining vibration mode when the active vibration reduction device and method for a machine tool according to the present disclosure is applied. FIG. 12 illustrates a graph illustrating a reduced state of normal-machining vibration during Y-axis cutting in the normal-machining vibration mode when the active vibration reduction device and method for a machine tool according to the present disclosure is applied.

An active vibration reduction device 1 for a machine tool according to an exemplary embodiment of the present disclosure will be described with reference to FIGS. 5 to 8 and FIGS. 10 to 12. As illustrated in FIGS. 7 to 10, the active vibration reduction device 1 for a machine tool according to an exemplary embodiment of the present disclosure includes an individual unit 100, an excitation unit 200, a sensing unit 300, a detection unit 400, and a control module 500.

The individual unit 100 is driven to machine a workpiece.

That is, in general, the machine tool includes various individual units that are fixed or movable relative to other fixed or moving devices in order to machine a workpiece. For example, a bed 10 may be fixedly installed on the ground or a base, and a saddle 20 may be installed to be movable in a horizontal, vertical, or height direction with respect to the bed. In addition, a column 30 is installed to be movable in a horizontal, vertical, or height direction with respect to the saddle, a spindle 40 is installed to be movable in a horizontal, vertical, or height direction with respect to the column, a tool 50 is rotatably mounted on a tip of the spindle, and a workpiece is machined using the rotating tool. In this way, in a state in which the machine tool is in operation for machining a workpiece or for non-machining, when the spindle, the saddle, and the column that make up the individual units move or the tool rotates, the dynamic characteristics change, causing vibration. A transfer unit that transfers each of the individual units in an axial direction is provided, and the transfer unit operates through a separate control device that controls the machine tool. Although not illustrated in the drawings, the transfer unit performs the function of transferring the saddle, the column, and the spindle. Such a transfer unit may be composed of a ball screw, a linear guide, and a linear guide block. In addition, the linear guide may be formed as an LM guide rail.

The excitation unit 200 is arranged on each individual unit and generates vibration when the individual unit is driven.

The sensing unit 300 senses vibration of the individual unit during driving of the individual unit. That is, the sensing unit is installed adjacent to a vibration generating portion of the individual unit where the excitation unit is arranged, and senses vibration of the individual unit. In addition, when the vibration generating portion of the individual unit where the excitation unit is arranged is provided in plural places, the sensing unit may be installed at a portion where the most vibration is generated or may be installed in plural at the vibration generating portions, as needed.

The detection unit 400 detects a drive amount of the individual unit during driving of the individual unit.

According to an exemplary embodiment of the present disclosure, the individual unit is a spindle that rotates during workpiece machining, and the drive amount detected by the detection unit may be a rotational speed of the spindle.

The control module 500 controls an operation of the excitation unit. That is, the control module causes the excitation unit to change and generate excitation opposite to vibration generated in the individual unit in any one of a weak-structure mode or a normal-machining mode depending on a type of vibration occurring in real time during driving of the individual unit for workpiece machining, thereby actively reducing vibration of the individual unit according to a workpiece machining condition.

In this way, in the active vibration reduction device for a machine tool according to an exemplary embodiment of the present disclosure, vibration of the individual unit is actively reduced according to a workpiece machining condition by causing the excitation unit to change and generate excitation opposite to vibration generated in the individual unit in any one of the weak-structure mode or the normal-machining mode depending on a type of vibration occurring in real time during driving of the individual unit for workpiece machining, and accordingly, dynamic stiffness can be improved through vibration reduction in the weak-structure mode, a material removal rate can be improved during milling machining in the normal-machining mode, and machined surface quality can be improved during semi-finishing or finishing machining, thereby maximizing machining accuracy of the machine tool, and enhancing reliability and safety of the machine tool.

In addition, although not illustrated in the drawings, the control module of the active vibration reduction device for a machine tool according to an exemplary embodiment of the present disclosure includes a programmable logic controller (PLC). The PLC performs communication with the spindle, the column, the saddle, the transfer unit thereof, the control unit, and the like in accordance with a predetermined protocol, and performs a function of executing a control command through the communication. That is, the PLC drives the transfer unit for the spindle, the column, and the saddle, spindle rotation, magazine, and the like in accordance with a numerical control program of the control unit.

In addition, although not illustrated in the drawings, according to a preferred exemplary embodiment of the present disclosure, the control module includes a main operation unit, and the main operation unit includes a screen display program, and a data input program according to a screen display selection, displays a software switch on a display screen according to an output of the screen display program, and performs a function of recognizing on/off of the software switch to issue an input/output command for a machine operation.

In addition, although not particularly limited thereto, the main operation unit is provided with a monitor that is installed on a housing, a case, or one side of the machine tool to display various function switches or buttons and various information.

As illustrated in FIG. 8, the control module 500 of the active vibration reduction device 1 for a machine tool according to an exemplary embodiment of the present disclosure includes a memory unit 510, a selection unit 520, a weak-structure excitation calculation unit 530, a normal-machining excitation calculation unit 540, and a processing unit 550.

The memory unit 510 stores data for actively reducing vibration of the individual unit. That is, the memory unit stores basic data, reference data, real-time data, and standard data for causing the excitation unit to change and generate excitation opposite to vibration generated in the individual unit in any one of the weak-structure mode or the normal-machining mode depending on a type of vibration occurring in real time during driving of the individual unit for workpiece machining, thereby actively reducing vibration of the individual unit.

The selection unit 520 compares and analyzes a sensing value sensed by the sensing unit and a drive amount detected by the detection unit with computed values computed based on the data stored in the memory unit, determines whether vibration occurring in real time during driving of the individual unit is weak-structure vibration or normal-machining vibration, and selects either a weak-structure mode or a normal-machining mode.

The weak-structure excitation calculation unit 530, when the selection unit selects the weak-structure mode, calculates, using the data stored in the memory unit, an intensity of weak-structure excitation to be generated by the excitation unit.

The normal-machining excitation calculation unit 540, when the selection unit selects the normal-machining mode, calculates, using the data stored in the memory unit and data from the selection unit, an intensity of normal-machining excitation to be generated by the excitation unit.

The processing unit 550, based on the data stored in the memory unit and on the weak-structure excitation value calculated by the weak-structure excitation calculation unit or on the normal-machining excitation value, determines a direction of weak-structure excitation or normal-machining excitation to be generated by the excitation unit, and generates, according to the determination result, weak-structure excitation or normal-machining excitation opposite to that of the individual unit, thereby actively reducing weak-structure vibration or normal-machining vibration of the individual unit.

As illustrated in FIG. 8, the memory unit 510 of the control module 500 of the active vibration reduction device 1 for a machine tool according to an exemplary embodiment of the present disclosure includes a basic data storage unit 511, a reference data storage unit 512, a real-time data storage unit 513, and a standard data storage unit 514.

The basic data storage unit 511 stores data on workpiece information, individual unit information, a machining program, and a drive program.

The reference data storage unit 512 stores data on a reference value and a gain value for each individual unit.

The real-time data storage unit 513 stores a sensing value sensed by the sensing unit and a drive amount detected by the detection unit during driving of the individual unit for workpiece machining.

The standard data storage unit 514 stores standard machining vibration data during normal-machining vibration according to a drive amount for each individual unit.

As illustrated in FIG. 8, the selection unit 520 of the control module 500 of the active vibration reduction device 1 for a machine tool according to an exemplary embodiment of the present disclosure includes a confirmation unit 521, a vibration detection unit 522, a computation unit 523, a comparison unit 524, and a decision unit 525.

The confirmation unit 521 confirms whether the individual unit is driven during workpiece machining.

The vibration detection unit 522 detects whether vibration of the individual unit occurs, based on the data stored in the real-time data storage unit, when a confirmation result of the confirmation unit indicates that the individual unit is driven.

The computation unit 523 computes a computed value for vibration according to a drive amount of the individual unit, based on the data stored in the real-time data storage unit and the data stored in the standard data storage unit, when a detection result of the vibration detection unit indicates that the individual unit is operated and vibration is detected.

The comparison unit 524 compares a reference value stored in the data stored in the reference data storage unit with the sensing value of the sensing unit and the computed value of the computation unit.

The decision unit 525 selects the normal-machining mode when a comparison result of the comparation unit indicates that the sensing value and the computed value are the same, or the sensing value is smaller than the computed value, or the sensing value is smaller than the reference value, and selects the weak-structure mode when a comparison result of the comparation unit indicates that the sensing value is greater than the computed value and exceeds the reference value.

As illustrated in FIG. 8, the weak-structure excitation calculation unit 530 of the control module 500 of the active vibration reduction device 1 for a machine tool according to an exemplary embodiment of the present disclosure includes a speed calculation unit 531, a weak-structure excitation value calculation unit 532, and a weak-structure excitation current value calculation unit 533.

The speed calculation unit 531 calculates a speed of the individual device, based on the data stored in the basic data storage unit and the reference data storage unit, when the weak-structure mode is selected by the decision unit.

The weak-structure excitation value calculation unit 532 calculates a weak-structure excitation value to be generated by the excitation unit, based on a calculation result of the speed calculation unit and the data stored in the basic data storage unit and the reference data storage unit.

The weak-structure excitation current value calculation unit 533 calculates a weak-structure excitation current value to be transmitted to the excitation unit, based on a calculation result of the weak-structure excitation value calculation unit and the data stored in the basic data storage unit and the reference data storage unit.

As illustrated in FIG. 8, the normal-machining excitation calculation unit 540 of the control module 500 of the active vibration reduction device 1 for a machine tool according to an exemplary embodiment of the present disclosure includes a normal-machining excitation value calculation unit 541, and a normal-machining excitation current value calculation unit 542.

The normal-machining excitation value calculation unit 541 calculates a normal-machining excitation value to be generated by the excitation unit, based on the computed value of the computation unit and the data stored in the standard data storage unit, when the normal-machining mode is selected by the decision unit.

The normal-machining excitation current value calculation unit 542 calculates a normal-machining excitation current value to be transmitted to the excitation unit, based on a calculation result of the normal-machining excitation value calculation unit and the data stored in the standard data storage unit.

According to an exemplary embodiment of the present disclosure, the computation unit and the normal-machining excitation value calculation unit calculate the computed value and the normal-machining excitation value through linear interpolation using the standard machining vibration data during normal-machining vibration stored in the standard data storage unit, according to the drive amount detected by the detection unit. Accordingly, even with insufficient data, an excitation value is calculated, and a current value corresponding to the normal-machining excitation is generated, thereby actively reducing the normal-machining excitation.

As illustrated in FIG. 8, the processing unit 550 of the control module 500 of the active vibration reduction device 1 for a machine tool according to an exemplary embodiment of the present disclosure includes a determination unit 551 and a reduction unit 552.

The determination unit 551 determines a direction of excitation to be generated by the excitation unit, based on a sensing result of the sensing unit, a detection result of the detection unit, a selection result of the selection unit, the data stored in the memory unit, and a calculation result of the weak-structure excitation current value calculation unit or a calculation result of the normal-machining excitation current value calculation unit.

The reduction unit 552 causes the excitation unit to generate excitation having a vibration intensity and a vibration direction opposite to those of the weak-structure vibration or the normal-machining vibration of the individual unit, thereby actively reducing the weak-structure vibration or the normal-machining vibration of the individual unit in real time, based on a sensing result of the sensing unit, a detection result of the detection unit, a selection result of the selection unit, a determination result of the determination unit, and the data stored in the memory unit.

As illustrated in FIG. 10, it can be seen that normal-machining vibration is reduced when comparing (a) a state before application of the active vibration reduction device and method for a machine tool according to an exemplary embodiment of the present disclosure and (b) a state after application of the active vibration reduction device and method for a machine tool according to an exemplary embodiment of the present disclosure.

In addition, as illustrated in FIGS. 11 and 12, it can be confirmed that normal-machining vibration is reduced by 85% or more along the X-axis and Y-axis when comparing upper graphs in FIGS. 11 and 12 (before application of the active vibration reduction device and method for a machine tool according to an exemplary embodiment of the present disclosure) and lower graphs in FIGS. 11 and 12 (after application of the active vibration reduction device and method for a machine tool according to an exemplary embodiment of the present disclosure).

In this way, in the active vibration reduction device and method for a machine tool according to an exemplary embodiment of the present disclosure, vibration of the individual unit is actively reduced according to a workpiece machining condition by causing the excitation unit to change and generate excitation opposite to vibration generated in the individual unit in any one of the weak-structure mode or the normal-machining mode depending on a type of vibration occurring in real time during driving of the individual unit for workpiece machining, and accordingly, dynamic stiffness can be improved through vibration reduction in the weak-structure mode, a material removal rate can be improved during milling machining in the normal-machining mode, and machined surface quality can be improved during semi-finishing or finishing machining, thereby maximizing machining accuracy of the machine tool, and enhancing safety and reliability of the machine tool.

Moreover, in the active vibration reduction device for a machine tool according to an exemplary embodiment of the present disclosure, the current and direction transmitted to the excitation unit are conveniently and promptly adjusted by the control unit to automatically control promptly and accurately the vibration intensity and vibration direction of excitation generated by the excitation unit. Accordingly, machining productivity can be improved by minimizing non-machining time due to analysis, maintenance, and the like for vibration reduction according to a dynamic characteristic state that changes in real time in the individual unit.

As illustrated in FIGS. 7 to 9, the excitation unit 200 of the active vibration reduction device for a machine tool according to an exemplary embodiment of the present disclosure includes a housing unit 210, a fixed unit 220, a vibration unit 230, a guide unit 240, an actuator unit 250, and a damper unit 260.

The housing unit 210 forms an external shape of the excitation unit and provides a space where the fixed unit, the actuator unit, the vibration unit, and the guide unit are installed. In addition, preferably, the housing unit 210 includes a plate-shaped base part 211 coupled to the individual device and a support part 212 extending to protrude from both sides of the base part in perpendicular directions and supporting the fixed unit and the guide unit. That is, the base part is formed in a roughly quadrangular plate shape, and the support part extends to protrude from both sides of the base part so as to face each other in perpendicular directions, thereby providing a space where the fixed unit and the guide unit are coupled and fixedly installed to the housing unit.

The fixed unit 220 is fixedly installed to the housing unit and selectively forms an electromagnetic field. In addition, preferably, the fixed unit 220 includes a stator core 221 both sides of which are fixedly coupled to the support part, and a stator 222 on which a coil is wound while surrounding an outer peripheral surface of the stator core. That is, the stator core is formed in a quadrangular rod or circular rod shape having a predetermined length in a horizontal direction, and a coil is wound around the stator core by a certain number of times, so that current flows through the coil of the stator in accordance with a current value signal transmitted through the processing unit of the reduction unit and an electromagnetic field is thus formed.

The vibration unit 230 is slidably coupled to the guide unit in order to generate excitation when a specific electromagnetic field is formed by a current value applied through the actuator unit.

In addition, preferably, the vibration unit 230 includes a slide part 231 configured to have a predetermined weight while accommodating therein the fixed unit composed of the stator core and the stator, and a permanent magnet 232 fixedly installed on an inner surface of the slide part to be spaced apart from the stator by a predetermined distance. The slide part may be formed in a substantially rectangular parallelepiped or cubic shape with a hollow cavity.

The actuator unit 250 transmits the current applied to the fixed unit under control of the control unit. That is, the actuator unit 250 is arranged at a part of the base part or support part, and performs a function of transmitting the current applied to the fixed unit according to the signal transmitted through the processing unit, thereby causing the current to flow through the coil wound around the stator to form an electromagnetic field. Additionally, the actuator unit includes and may include a vibration sensor. Such a vibration sensor may be formed as an acceleration sensor or the like.

The guide unit 240 is installed in a part of the housing unit. In addition, preferably, the guide unit 240 includes a rail part 241 both sides of which are coupled to the support part so as to be parallel to the stator core, and a block part 242 formed on an outer surface of the slide part so as to guide movement of the slide part and sliding along the rail part.

The damper unit 260 is arranged between the housing unit and the vibration unit to suppress vibration occurring during the sliding movement of the slide part and prevent damage to the slide part and the like.

In this way, in the active vibration reduction device for a machine tool according to an exemplary embodiment of the present disclosure, the fixed unit and vibration unit of the excitation unit are implemented in a sliding manner using an electromagnet so that excitation having a magnitude and direction opposite to the vibration data of the individual device sensed by the sensing unit is accurately and promptly generated by the excitation unit to actively reduce in real time vibrations generated from the individual device, and accordingly, through downsizing of the excitation unit, production and maintenance costs can be reduced, space utilization can be maximized, and compactness of the machine tool can be achieved.

In addition, the excitation unit of the active vibration reduction device for a machine tool may be arranged in plurality on one individual device and generate multi-degree-of-freedom excitation under control of the control unit.

That is, as illustrated in FIG. 9, in the active vibration reduction device for a machine tool according to another exemplary embodiment of the present disclosure, an excitation unit 200' includes a first excitation part 201 and a second excitation part 202 arranged to be orthogonal to each other, and the first excitation part generates excitation in the Y-axis direction opposite to the vibration in the Y-axis direction of the individual device, and the second excitation part generates excitation in the Z-axis direction opposite to the vibration in the Z-axis direction of the individual device. Accordingly, the excitation generated by the excitation unit is also generated to have two degrees of freedom with respect to the vibration of two degrees of freedom of the individual device, so that multi-degree-of-freedom excitation can be generated actively, promptly and automatically with respect to the multi-degree-of-freedom excitation of the individual device, thereby actively reducing the vibration.

An active vibration reduction method for a machine tool according to an exemplary embodiment of the present disclosure will be described with reference to FIG. 10. The active vibration reduction method for a machine tool according to an exemplary embodiment of the present disclosure includes a data storage step (S1), a confirmation step (S2), a sensing step (S3), a detection step (S4), a vibration detection step (S5), a computation step (S6), a comparison step (S7), a selection step (S8), a weak-structure excitation calculation step (S9-1), a normal-structure excitation calculation step (S9-2), a determination step (S10), and a reduction step (S11).

The overall operating principle, control method, equipment configuration, and the like of the active vibration reduction method for a machine tool according to an exemplary embodiment of the present disclosure are the same as those of the active vibration reduction device for a machine tool according to an exemplary embodiment of the present disclosure, and descriptions will be given, focusing on differences.

Data is stored to cause an excitation unit to change and generate excitation opposite to vibration generated in an individual unit in any one of a weak-structure mode or a normal-machining mode depending on a type of vibration occurring in real time during driving of the individual unit for workpiece machining, thereby actively reducing vibration of the individual unit.

After the data storage step (S1), it is confirmed whether the individual unit is driven during workpiece machining.

After the confirmation step (S2), vibration of the individual unit is sensed when a confirmation result indicates that the individual unit is driven.

After the sensing step (S3), a drive amount of the individual unit is detected when the confirmation result indicates that the individual unit is driven.

After the detection step (S4), whether vibration of the individual unit occurs during driving of the individual unit is detected, based on a confirmation result, a sensing result, and a detection result.

After the vibration detection step (S5), when a vibration detection result indicates that vibration of the individual unit is detected, a computed value for vibration according to a drive amount of the individual unit is computed based on the drive amount of the individual unit and pre-stored data.

After the computation step (S6), a reference value stored in the pre-stored data, a sensing value obtained from a sensing result, and a computed value obtained from a computation result are compared.

After the comparison step (S7), the normal-machining mode is selected when a comparison result indicates that the sensing value and the computed value are the same, or the sensing value is smaller than the computed value, or the sensing value is smaller than the reference value, and the weak-structure mode is selected when a comparison result indicates that the sensing value is larger than the computed value and exceeds the reference value

After the selection step (S8), an intensity of weak-structure excitation to be generated by the excitation unit is calculated based on the pre-stored data and a selection result, when the selection result indicates that the weak-structure mode is selected, and an intensity of normal-machining excitation to be generated by the excitation unit is calculated based on the pre-stored data and a selection result, when the selection result indicates that the normal-machining mode is selected.

After the weak-structure excitation calculation step (S9-1) or the normal-structure excitation calculation step (S9-2), a direction of the weak-structure excitation or normal-machining excitation to be generated by the excitation unit is determined based on a sensing result, a detection result, a confirmation result, a selection result, a calculation result, and the pre-stored data.

After the determination step (S10), the excitation unit is caused to generate excitation having a vibration intensity and a vibration direction opposite to those of weak-structure vibration or normal-machining vibration of the individual unit, thereby actively reducing the weak-structure vibration or normal-machining vibration of the individual unit in real time, based on a sensing result, a detection result, a confirmation result, a selection result, a calculation result, a determination result, and the pre-stored data.

While the present disclosure has been described above with reference to the exemplary embodiments of the present disclosure in the detailed description of the present disclosure, it may be understood, by those skilled in the art or those of ordinary skill in the art, that the present disclosure may be variously modified and changed without departing from the spirit and scope of the present disclosure disclosed in the claims. Accordingly, the technical scope of the present disclosure should not be limited to the contents disclosed in the detailed description of the specification but should be defined only by the claims.

### [Description of Main Reference Numerals of Drawings]

1: active vibration reduction device
100: individual unit
200: excitation unit
300: sensing unit
400: detection unit
500: control module

## Claims

1. An active vibration reduction device for a machine tool, comprising:
an individual unit configured to be driven for workpiece machining;
an excitation unit arranged on the individual unit and configured to generate excitation during driving of the individual unit; and
a control module configured to control an operation of the excitation unit, wherein
the control module causes the excitation unit to change and generate excitation opposite to vibration generated in the individual unit in any one of a weak-structure mode or a normal-machining mode depending on a type of vibration occurring in real time during driving of the individual unit for workpiece machining, thereby actively reducing vibration of the individual unit according to a workpiece machining condition.

2. The active vibration reduction device for a machine tool according to claim 1, further comprising:
a sensing unit configured to sense vibration of the individual unit during driving of the individual unit; and
a detection unit configured to detect a drive amount of the individual unit during driving of the individual unit.

3. The active vibration reduction device for a machine tool according to claim 2, wherein the control module comprises
a memory unit configured to store data for actively reducing vibration of the individual unit;
a selection unit configured to compare and analyze a sensing value sensed by the sensing unit and a drive amount detected by the detection unit with computed values computed based on the data stored in the memory unit, to determine whether vibration occurring in real time during driving of the individual unit is weak-structure vibration or normal-machining vibration, and to select either a weak-structure mode or a normal-machining mode;
a weak-structure excitation calculation unit configured to, when the selection unit selects the weak-structure mode, calculate, using the data stored in the memory unit, an intensity of weak-structure excitation to be generated by the excitation unit;
a normal-machining excitation calculation unit configured to, when the selection unit selects the normal-machining mode, calculate, using the data stored in the memory unit and data from the selection unit, an intensity of normal-machining excitation to be generated by the excitation unit; and
a processing unit configured to, based on the data stored in the memory unit and on the weak-structure excitation value calculated by the weak-structure excitation calculation unit or on the normal-machining excitation value, determine a direction of weak-structure excitation or normal-machining excitation to be generated by the excitation unit, and to generate, according to the determination result, weak-structure excitation or normal-machining excitation opposite to that of the individual unit, thereby actively reducing weak-structure vibration or normal-machining vibration of the individual unit.

4. The active vibration reduction device for a machine tool according to claim 3, wherein the memory unit comprises
a basic data storage unit configured to store data on workpiece information, individual unit information, a machining program, and a drive program;
a reference data storage unit configured to store data on a reference value and a gain value for each individual unit;
a real-time data storage unit configured to store a sensing value sensed by the sensing unit and a drive amount detected by the detection unit during driving of the individual unit for workpiece machining; and
a standard data storage unit configured to store standard machining vibration data during normal-machining vibration according to a drive amount for each individual unit.

5. The active vibration reduction device for a machine tool according to claim 4, wherein the selection unit comprises
a confirmation unit configured to confirm whether the individual unit is driven during workpiece machining;
a vibration detection unit configured to detect whether vibration of the individual unit occurs, based on the data stored in the real-time data storage unit, when a confirmation result of the confirmation unit indicates that the individual unit is driven;
a computation unit configured to compute a computed value for vibration depending on a drive amount of the individual unit, based on the data stored in the real-time data storage unit and the data stored in the standard data storage unit, when a detection result of the vibration detection unit indicates that the individual unit is operated and vibration is detected;
a comparison unit configured to compare a reference value stored in the data stored in the reference data storage unit with the sensing value of the sensing unit and the computed value of the computation unit; and
a decision unit configured to select the normal-machining mode when a comparison result of the comparation unit indicates that the sensing value and the computed value are the same, or the sensing value is smaller than the computed value, or the sensing value is smaller than the reference value, and to select the weak-structure mode when a comparison result of the comparation unit indicates that the sensing value is greater than the computed value and exceeds the reference value.

6. The active vibration reduction device for a machine tool according to claim 5, wherein the weak-structure excitation calculation unit comprises
a speed calculation unit configured to calculate a speed of the individual unit, based on the data stored in the basic data storage unit and the reference data storage unit, when the weak-structure mode is selected by the decision unit;
a weak-structure excitation value calculation unit configured to calculate a weak-structure excitation value to be generated by the excitation unit, based on a calculation result of the speed calculation unit and the data stored in the basic data storage unit and the reference data storage unit; and
a weak-structure excitation current value calculation unit configured to calculate a weak-structure excitation current value to be transmitted to the excitation unit, based on a calculation result of the weak-structure excitation value calculation unit and the data stored in the basic data storage unit and the reference data storage unit.

7. The active vibration reduction device for a machine tool according to claim 6, wherein the normal-machining excitation calculation unit comprises
a normal-machining excitation value calculation unit configured to calculate a normal-machining excitation value to be generated by the excitation unit, based on the computed value of the computation unit and the data stored in the standard data storage unit, when the normal-machining mode is selected by the decision unit; and
a normal-machining excitation current value calculation unit configured to calculate a normal-machining excitation current value to be transmitted to the excitation unit, based on a calculation result of the normal-machining excitation value calculation unit and the data stored in the standard data storage unit.

8. The active vibration reduction device for a machine tool according to claim 7, wherein the processing unit comprises
a determination unit configured to determine a direction of excitation to be generated by the excitation unit, based on a sensing result of the sensing unit, a detection result of the detection unit, a selection result of the selection unit, the data stored in the memory unit, and a calculation result of the weak-structure excitation current value calculation unit or a calculation result of the normal-machining excitation current value calculation unit; and
a reduction unit configured to cause the excitation unit to generate excitation having a vibration intensity and a vibration direction opposite to those of the weak-structure vibration or the normal-machining vibration of the individual unit, thereby actively reducing the weak-structure vibration or the normal-machining vibration of the individual unit in real time, based on a sensing result of the sensing unit, a detection result of the detection unit, a selection result of the selection unit, a determination result of the determination unit, and the data stored in the memory unit.

9. The active vibration reduction device for a machine tool according to claim 7, wherein the computation unit and the normal-machining excitation value calculation unit calculate the computed value and the normal-machining excitation value through linear interpolation using the standard machining vibration data during normal-machining vibration stored in the standard data storage unit, according to the drive amount detected by the detection unit.

10. The active vibration reduction device for a machine tool according to claim 2, wherein the individual unit is a spindle configured to rotate during workpiece machining, and
the drive amount detected by the detection unit is a rotational speed of the spindle.

11. The active vibration reduction device for a machine tool according to claim 1, wherein the excitation unit comprises:
a housing unit;
a fixed unit fixedly installed on the housing unit and configured to selectively form an electromagnetic field;
an actuator unit configured to transmit a current applied to the fixed unit under control of the control module;
a guide unit installed on a portion of the housing unit; and
a vibration unit slidably coupled to the guide unit to generate excitation when a specific electromagnetic field is formed by a current value applied through the actuator unit.

12. The active vibration reduction device for a machine tool according to claim 11, wherein the excitation unit further comprises a damper unit arranged between the housing unit and the vibration unit.

13. The active vibration reduction device for a machine tool according to claim 1, wherein the excitation unit is arranged in plurality on one individual unit and generates multi-degree-of-freedom excitation under control of the control module.

14. An active vibration reduction method for a machine tool, comprising:
storing data for causing an excitation unit to change and generate excitation opposite to vibration generated in an individual unit in any one of a weak-structure mode or a normal-machining mode depending on a type of vibration occurring in real time during driving of the individual unit for workpiece machining, thereby actively reducing vibration of the individual unit;
confirming whether the individual unit is driven during workpiece machining;
sensing vibration of the individual unit when a confirmation result indicates that the individual unit is driven;
detecting a drive amount of the individual unit when a confirmation result indicates that the individual unit is driven;
detecting whether vibration of the individual unit occurs during driving of the individual unit, based on a confirmation result, a sensing result, and a detection result;
computing a computed value for vibration according to a drive amount of the individual unit, based on the drive amount of the individual unit and pre-stored data, when a vibration detection result indicates that vibration of the individual unit is detected;
comparing a reference value stored in the pre-stored data, a sensing value obtained from a sensing result, and a computed value obtained from a computation result;
selecting the normal-machining mode when a comparison result indicates that the sensing value and the computed value are the same, or the sensing value is smaller than the computed value, or the sensing value is smaller than the reference value, and selecting the weak-structure mode when a comparison result indicates that the sensing value is larger than the computed value and exceeds the reference value;
calculating an intensity of weak-structure excitation to be generated by the excitation unit, based on the pre-stored data and a selection result, when the selection result indicates that the weak-structure mode is selected, and calculating an intensity of normal-machining excitation to be generated by the excitation unit, based on the pre-stored data and a selection result, when the selection result indicates that the normal-machining mode is selected;
determining a direction of the weak-structure excitation or normal-machining excitation to be generated by the excitation unit, based on a sensing result, a detection result, a confirmation result, a selection result, a calculation result, and the pre-stored data; and
causing the excitation unit to generate excitation having a vibration intensity and a vibration direction opposite to those of weak-structure vibration or normal-machining vibration of the individual unit, thereby actively reducing the weak-structure vibration or normal-machining vibration of the individual unit in real time, based on a sensing result, a detection result, a confirmation result, a selection result, a calculation result, a determination result, and the pre-stored data.
